**Europäisches Patentamt**

**European Patent Office**

**Office européen des brevets**

(19)

(11) Veröffentlichungsnummer : **0 020 349
B1**

(12) # EUROPÄISCHE PATENTSCHRIFT

(45) Veröffentlichungstag der Patentschrift :
26.01.83

(21) Anmeldenummer : 79900735.6

(22) Anmeldetag : 13.07.79

(86) Internationale Anmeldenummer :
PCT/CH 79/00099

(87) Internationale Veröffentlichungsnummer :
WO WO/80014 (10.07.80 Gazettee 80/15)

(51) Int. Cl.³ : **H 02 H 7/22**, H 02 H 3/04,
H 02 B 1/18

(54) Überwachungseinrichtung mit einem passiven optischen Sensor zur Erfassung von Störlichtbögen in Schaltanlagen.

(30) Priorität : 27.12.78 DE 2856188

(43) Veröffentlichungstag der Anmeldung :
07.01.81 Patentblatt 81/01

(45) Bekanntmachung des Hinweises auf die Patenterteilung : 26.01.83 Patentblatt 83/04

(84) Benannte Vertragsstaaten :
CH GB NL SE

(56) Entgegenhaltungen :
DE A 2 107 584
US A 3 952 196
US A 4 067 052

ASEA Journal, vol. 49, no. 6, veröffentlicht in 1976, (Vasteraas, SE) W, Pucher « Arc monitor -1 short-circuit protection for indoor switchgear » siehe Seite 139, linke Spalte, Abschnitt 3. Elektrotechnische Zeitschrift, Ausgabe A, vol. 98, no. 7, veröffentlicht im Juli 1977 (VDE Verlag, Berlin) P. Gehrmann « Ortung von elektrischen Überschlägen in metallgekapselten SF6-Hochspannungsanlagen », siehe Seite 493, rechte Spalte.

(73) Patentinhaber : **BBC Aktiengesellschaft Brown, Boveri & Cie.**
**Haselstrasse**
**CH-5401 Baden (CH)**

(72) Erfinder : **KUNTERMANN, Jürgen H.**
**Hardtweg 7**
**7151 Burgstetten (DE)**

(56) Entgegenhaltungen :
Mechanical Engineer, vol. 98, no. 3, veröffentlicht im März 1976, (New York US), R. H. Pahler et al. « Design of a fiber optic pressure transducer », siehe Seite 105 ; Figur.

# Ueberwachungseinrichtung mit einem passiven optischen Sensor zur Erfassung von Störlichtbögen in Schaltanlagen

Die Erfindung bezieht sich auf eine Ueberwachungseinrichtung mit einem passiven optischen Sensor zur Erfassung von Störlichtbögen in Schaltanlagen, insbesondere in gekapselten, $SF_6$-isolierten Hochspannungs-Schaltanlagen, enthaltend einen gasdicht eingesetzten Lichtleiter zur Ausleitung des Störlichtes.

Die zunehmende Energiedichte im Verbundnetz sowie der Uebergang zu höheren Uebertragungsspannungen macht es erforderlich, den Netzschutz zu verbessern. Hierbei kommt es wesentlich darauf an, die Zuverlässigkeit des Netzschutzes zu erhöhen. Die in Netzschutzeinrichtungen verwendeten Geber, etwa Sensoren zur Erfassung von Störlichtbögen in Schaltanlagen, gehören als erstes Glied im Signalflussweg der Schutzeinrichtung zu den wesentlichen und für die Funktionssicherheit der Einrichtung wichtigsten Bauteilen.

In der DE-A-24 47 240 wird eine Einrichtung beschrieben, bei der zur Erfassung und Signalisierung ein passiver Sensor verwendet wird. Der Sensor besteht aus einem geschlossenen Behälter. Wie dieser beschaffen ist, wird nicht erwähnt. Ein Lichtleiter verbindet den Behälter mit dem Erfassungssystem. Der Behälter und das Erfassungssystem sind dadurch galvanisch getrennt. Eine Funktionsüberwachung des Sensors wird nicht vorgenommen. Aus den eingangs genannten Gründen ist es aber inzwischen erforderlich geworden, den Netzschutz zu verbessern und somit neben der Zentraleinheit der Netzschutzeinrichtung auch die Sensoren mit in eine Funktionskontrolle einzubeziehen.

Weiterhin ist der DE-A-22 16 238 eine Einrichtung zum Schutz von gekapselten, mit Druckgas isolierten Schaltanlagen gegen Störlichtbögen zu entnehmen, deren Sensoren aus einem lichtempfindlichen Element, einer Photozelle etwa, bestehen. Die innerhalb der Kapselung einer Schaltanlage angeordneten lichtempfindlichen Elemente sind zur Funktionskontrolle jeweils direkt mit einer Lichtquelle versehen. Das lichtempfindliche Element, z.B. eine Photozelle, wie auch die für Prüfzwecke benutzte Lichtquelle, z.B. eine Glühlampe, sind Aktivteile des Sensors und unterliegen damit dem Verschleiss, was der Zuverlässigkeit des Sensors abträglich ist, der deshalb in gewissen Zeitabständen auszuwechseln ist, wozu die Kapselung der Schaltanlage geöffnet werden muss, was sich als aufwendig erweist.

Der Erfindung liegt die Aufgabe zugrunde, mit einem von ausserhalb der Kapselung zugeführten Prüflichtimpuls die Zuverlässigkeit des Sensors zu verbessern.

Diese Aufgabe wird erfindungsgemäss durch die Merkmale der Ansprüche 1 und 10 gelöst. Der Sensor enthält dabei gemäss Anspruch 1 einen Schutzzylinder, in dem die beiden Lichtleiter in axialer Richtung angeordnet sind. Dieser Schutzzylinder weist an seiner Stirnseite zur Bündelung der Prüflichtimpulse eine Sammellinse auf. Bei einer anderen Anordnung der Erfindung gemäss Anspruch 10 ist der den Prüflichtimpuls heranführende Lichtleiter so umgebogen und angeordnet, dass der aus seinem freien Ende in den zu überwachenden Raum austretende Prüflichtimpuls unmittelbar wieder in den Sensor eintritt.

Eine zweckmässige Weiterbildung der Erfindung kann darin bestehen, dass der Schutzzylinder entweder transparent ist und seine Stirnseite als Sammellinse ausgebildet ist, oder mit der Sammellinse zusammensetzbar ist. Auch kann mit Abstand vor der Sammellinse ein Reflektor angeordnet sein.

Es ist auch möglich, beide Lichtleiter in einem mehrarmigen Lichtleitbündel, das aus einem Sendebündel und einem Empfangsbündel besteht, zusammenzufassen. Ein mehrarmiges Lichtleitbündel mit kreisförmigem Querschnitt kann z.B. für das Sendebündel und das Empfangsbündel zwei halbkreisförmige Teilquerschnitte aufweisen oder einen Kreisring und einen kleinen darin eingeschlossenen Kreis.

Die mit der Erfindung erzielten Vorteile bestehen insbesondere darin, dass es sich um einen passiven Sensor handelt, der somit keinerlei dem Verschleiss unterliegende Aktivteile aufweist und deshalb mit hoher Zuverlässigkeit arbeitet. Dabei wirkt sich für die Funktionssicherheit weiterhin günstig aus, dass der Prüflichtimpuls einen Teil des zu überwachenden Raumes der Schaltanlage durchläuft und dabei in seinem Strahlengang über den Reflektor oder der entsprechend umgebogenen Lichtleiter aus dem Gasraum heraus wieder in den Sensor eintritt, wobei die Austrittsstelle sowie die Eintrittsstelle, hier eine Sammellinse, und die Reflexionsstelle auf Trübung durch lichtdämpfenden Belag auf ihrer Oberfläche ($SF_6$-Zersetzungsprodukte) geprüft wird. Damit sind der Sensor wie auch sein Verbindungsweg zur Auswerteeinheit einschliesslich der optoelektronischen Wandlung von der Funktionskontrolle völlig erfasst, so dass auch im Falle eines Störlichtbogens der damit verbundene Lichtimpuls von dem Sensor sicher erfasst und an die Auswerteeinheit weitergeleitet wird. Ausserdem ist der Sensor nicht metallisch, so dass der Feldlinienverlauf nur wenig beeinflusst wird.

In zwei vereinfachten, beispielhaften Ausführungen soll die Erfindung anhand einer Zeichnung dargestellt und im folgenden näher beschrieben werden :

Es zeigt

Figur 1 einen Sensor im Detail mit schematischer Darstellung der Umlenkung eines Prüflichtimpulses über einen Reflektor ;

Figur 2 einen Sensor im Detail mit schematischer Dartstellung der Umlenkung eines Prüflichtimpulses durch einen entsprechend gebogenen Lichtleiter ;

Figur 3 in schematischer Darstellung ein Funktionsschaltbild des Sensors in Verbindung mit einer Auswerteeinheit und dem Auslösekreis für einen Schnellerder.

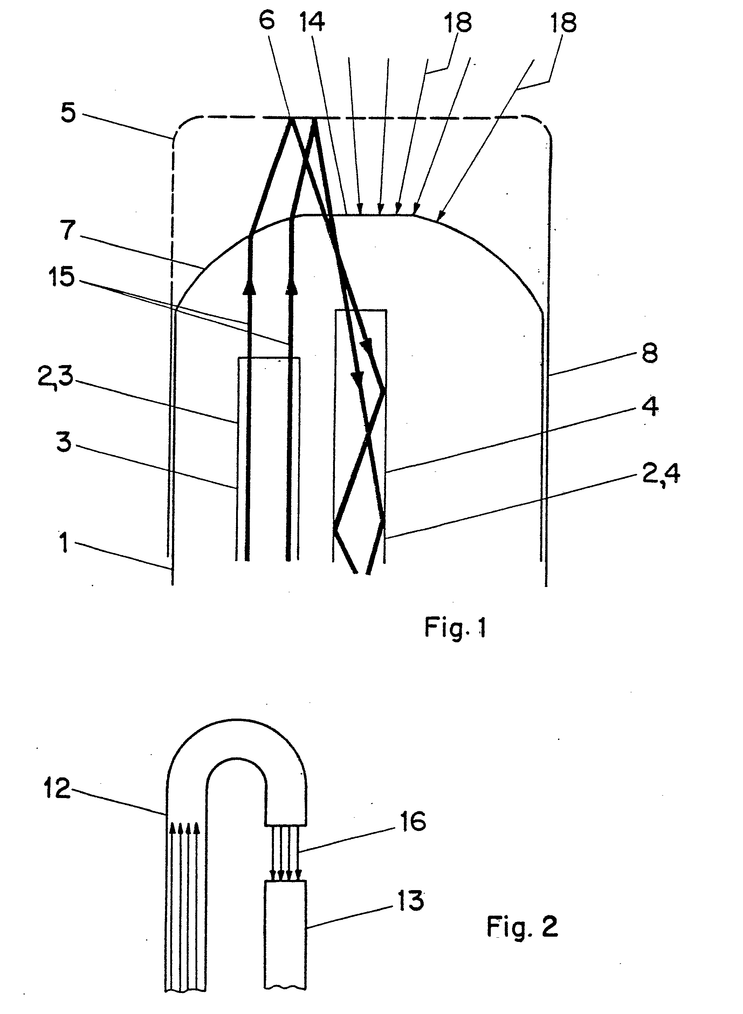

Der Fig. 1 ist im Detail die Ausbildung des Kopfteils eines passiven Sensors zu entnehmen, durch welche eine Funktionskontrolle des Sensors erreicht wird. Der Sensor weist einen aus Acrylglas hergestellten Schutzzylinder 1 auf, der zwei in axialer Richtung und parallel zueinander zur Stirnfläche hin verlaufende Sacklochbohrungen 2.3, 2.4 enthält, die jeweils zur Aufnahme eines Lichtleiters 3, 4 dienen. Ueber den Lichtleiter 3 wird an den Sensor ein Prüflichtimpuls 15 herangeführt, der über einen in Abstand vor der Stirnfläche des Schutzzylinders 1 angeordneten Reflektor 5 so umgelenkt wird, dass er nach Durchlauf einer kurzen Strecke des zu überwachenden Raumes der Schaltanlage in den Lichtleiter 4 wieder eintritt. Der Reflektor 5 ist aus einem gelochten Blech topfförmig ausgebildet und auf die Stirnfläche des Schutzzylinders 1 aufgesteckt. Im Reflexionsbereich weist der Reflektor 5 einen Metallspiegel 6 auf. Der Schutzzylinder 1 ist an seiner Stirnseite zur Bündelung der Prüflichtimpulse 15 als Sammellinse 7 ausgebildet, die in der Nähe der optischen Achse, d.h. über dem Lichtleiter 4 im Wiedereintrittsbereich der reflektierten Prüflichtimpulse 15, eine Abplattung 14 aufweist. Um zu verhindern, dass Streulicht aus dem Lichtleiter 3 direkt in den Lichtleiter 4 gelangt, ist der Lichtleiter 3 gegenüber dem Lichtleiter 4 in axialer Richtung zurückgesetzt angeordnet.

Da der Prüflichtimpuls in seinem Strahlengang drei, eventuell einen Belag aufweisende Oberflächen berührt, nämlich Austrittsfläche und Eintrittsfläche des Sensors sowie den Reflektor, reagiert der Prüflichtimpuls sehr empfindlich auf eine Trübung.

Der Fig. 2 ist ein weiteres Ausführungsbeispiel eines passiven Sensors zu entnehmen. Zur Umlenkung der Prüflichtimpulse 16 ist das freie Ende des die Prüflichtimpulse heranführenden Lichtleiters 12 um 180° umgebogen, so dass sich seine Lichtaustrittsfläche sowie die Lichteintrittsfläche des Lichtleiters 13 einander direkt gegenüberliegen, unter Einhaltung eines gewissen Abstandes voneinander, so dass nun die Prüflichtimpulse 16 aus dem Lichtleiter 12 austreten, eine gewisse Strecke des zu überwachenden Raumes der Schaltanlage durchlaufen und dann wieder in den Lichtleiter 13 des Sensors eintreten. Dabei gelangen die Prüflichtimpulse 16 ebenfalls wie im Ausführungsbeispiel 1 (Fig. 1) von aussen, nämlich aus dem Gasraum der Schaltanlage, in den Sensor, und prüfen so die Lichteintrittsstelle desselben auf Trübung durch lichtdämpfenden Belag auf der Oberfläche. Damit wird· auch im Falle eines Störlichtbogens der damit verbundene Lichtimpuls 18 von dem Sensor sicher erfasst.

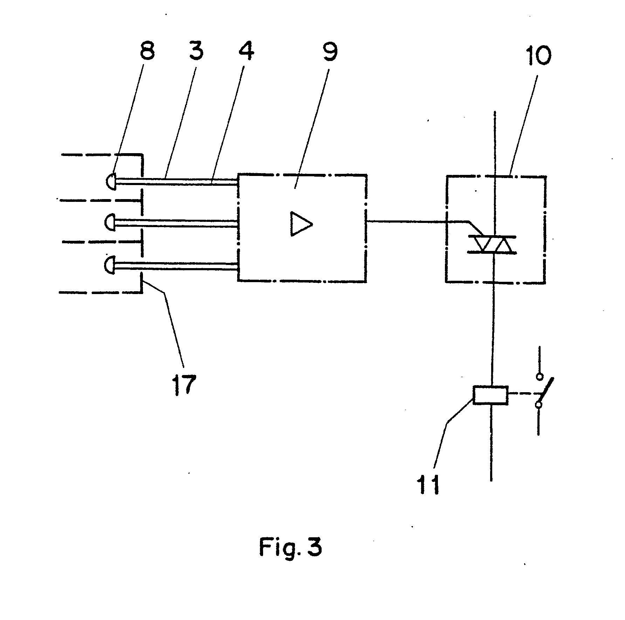

Die in Fig. 3 gezeigten passiven Sensoren 8 sind innerhalb der Kapselung 17 einer $SF_6$-isolierten Hochspannungs-Schaltanlage angeordnet, wobei bei abgeschotteter Anlage sich in jedem Schottraum mindestens ein Sensor 8 befindet. Die Lichtleiter 3, 4 der Sensoren sind mit einer Auswerteeinheit 9 verbunden, die eine photoelektrische Verstärkerschaltung enthält, in der über eine Photodiode der Lichtimpuls in einen elektrischen Impuls zur Weiterverarbeitung des Signals umgewandelt wird. Zur Energieformwandlung des optischen Signals kann die photoelektrische Verstärker-Eingangsschaltung auch mit einem Photowiderstand oder mit einem Phototransistor versehen sein.

Die Auswerteeinheit enthält desweiteren einen Prüfimpulsgenerator zur Erzeugung von Prüflichtimpulsen, die über den Lichtleiter 3 an den Sensor 8 herangeführt, eine kurze Strecke des zu überwachenden Raumes der Schaltanlage durchlaufen, und über einen Reflektor so umgelenkt werden, dass sie aus dem Gasraum wieder in den Lichtleiter 4 des Sensors eintreten und weiter in die Auswerteeinheit 9 gelangen. Die Auswerteeinheit 9 steuert im Auslösekreis als Verstärker-Schaltglied einen Triac 10 an, der wiederum ein Auslöserelais 11 betätigt, das mit seinem Kontakt auf einen nicht näher dargestellten sprengstoffbetätigten Schnellerder wirkt, der innerhalb kürzester Zeit in Erdschlussstellung geht und so den Störlichtbogen kurzschiesst und zum Verlöschen bringt.

## Ansprüche

1. Ueberwachungseinrichtung mit einem passiven optischen Sensor (8) zur Erfassung von Störlichtbögen in Schaltanlagen, insbesondere in gekapselten $SF_6$-isolierten Hochspannung-Schaltanlagen, enthaltend einen gasdicht eingesetzten Lichtleiter (4) zur Ausleitung der Lichtimpulse (18) eines Störlichtbogens, dadurch gekennzeichnet, dass der Sensor (8) nicht metallisch ist und mindestens einen zweiten, mit einer externen Lichtquelle zur Erzeugung von Prüflichtimpulsen (15) verbundenen Lichtleiter (3) aufweist, dass der Sensor (8) einen Schutzzylinder (1) aufweist, in dem die beiden Lichtleiter (3, 4) in axialer Richtung angeordnet sind, dass der Schutzzylinder (1) an seiner Stirnseite zur Bündelung der Prüflichtimpulse (15) eine Sammellinse (7) aufweist und dass der Prüflichtimpuls (15) durch einen Teil des zu überwachenden Raumes geführt ist, bevor er wieder in den Sensor (8) und den ersten Lichtleiter (4) eintritt.

2. Ueberwachungseinrichtung nach Anspruch 1, dadurch gekennzeichnet, dass der Schutzzylinder (1) transparent ist und seine Stirnseite als Sammellinse (7) ausgebildet ist und dass mit Abstand vor der Sammellinse (7) ein Reflektor (5) angeordnet ist.

3. Ueberwachungseinrichtung nach Anspruch 1, dadurch gekennzeichnet, dass der Schutzzylinder (1) und die Sammellinse (7) zusammensetzbar sind, dass der Schutzzylinder (1) aus einem anderen Material als die Sammellinse (7) besteht und dass mit Abstand vor der Sammellinse (7) ein Reflektor (5) angeordnet ist.

4. Ueberwachungseinrichtung nach Anspruch 2 oder 3, dadurch gekennzeichnet, dass die Sammellinse (7) im Bereich der optischen Achse eine Abplattung (14) aufweist.

5. Ueberwachungseinrichtung nach einem der Ansprüche 2 bis 4, dadurch gekennzeichnet, dass die Sammellinse (7) aus einem Material besteht, dessen Brechungszahl grösser ist als die von $SF_6$ (Schwefelhexafluorid).

6. Ueberwachungseinrichtung nach einem der Ansprüche 2 bis 5, dadurch gekennzeichnet, dass die Sammellinse (7) aus Acrylglas besteht.

7. Ueberwachungseinrichtung nach Anspruch 2 oder 3, dadurch gekennzeichnet, dass der Reflektor (5) aus einem gelochten Material korbförmig ausgebildet, auf die Sammellinse (7) aufsteckbar ist, und dass der Reflektor (5) im Reflexionsbereich einen Metallspiegel oder eine verspiegelte Fläche (6) aufweist.

8. Ueberwachungseinrichtung nach einem der Ansprüche 1 bis 7, dadurch gekennzeichnet, dass der mit der externen Lichtquelle verbundene Lichtleiter (3) gegenüber dem anderen Lichtleiter (4) in axialer Richtung zurückgesetzt angeordnet ist.

9. Ueberwachungseinrichtung nach einem der Ansprüche 1 bis 8, dadurch gekennzeichnet, dass beide Lichtleiter (3, 4) in einem mehrarmigen Lichtleitbündel, mit einem Sendebündel und einem Empfangsbündel, zusammengefasst sind.

10. Ueberwachungseinrichtung mit einem passiven optischen Sensor zur Erfassung von Störlichtbögen in Schaltanlagen, insbesondere in gekapselten $SF_6$-isolierten Hochspannungs-Schaltanlagen, enthaltend einen gasdicht eingesetzten Lichtleiter (13) zur Ausleitung der Lichtimpulse eines Störlichtbogens, dadurch gekennzeichnet, dass der Sensor, nicht metallisch ist und mindestens einen zweiten mit einer externen Lichtquelle zur Erzeugung von Prüflichtimpulsen (16) verbundenen Lichtleiter (12) aufweist, dass der Prüflichtimpuls (16) durch einen Teil des zu überwachenden Raumes geführt wird, bevor er wieder in den Sensor und den ersten Lichtleiter (13) eintritt, und dass der den Prüflichtimpuls (16) heranführende Lichtleiter (12) so umgebogen und angeordnet ist, dass der aus seinem freien Ende in den zu überwachenden Raum austretende Prüflichtimpuls (16) unmittelbar wieder in den Sensor eintritt.

**Claims**

1. A monitoring device having a passive optical detector (8) for detecting unwanted arcs in switching systems and particularly in encapsulated, $SF_6$-insulated high-voltage switching systems, comprising an optical wave guide (4), which is inserted in a gas-tight manner for conducting out the light pulses (18) of an unwanted arc, characterised in that the detector (8) is not metallic and is provided with at least a second optical wave guide (3) which is connected with an external light source for generating test pulses of light (15), that the detector (8) is provided with a protective cylinder (1) in which the two optical wave guides (3, 4) are arranged in axial direction, that the protective cylinder (1) is provided at its front with a collecting lens (7) for focussing the test pulses of light (15) and that the test pulse of light (15) is conducted through a part of the space to be monitored before it re-enters the detector (8) and the first optical wave guide (4).

2. A monitoring device according to Claim 1, characterised in that the protective cylinder (1) is transparent and that its front is constructed as a collecting lens (7), and that a reflector (5) is arranged at a distance in front of the collecting lens (7).

3. A monitoring device according to Claim 1, characterised in that the protective cylinder (1) and the collecting lens (7) can be assembled together, that the protective cylinder (1) consists of a different material from that of the collecting lens (7) and that a reflector (5) is arranged at a distance in front of the collecting lens (7).

4. A monitoring device according to Claim 2 or 3, characterised in that the collecting lens (7) is provided with a flattening (14) in the region of the optical axis.

5. A monitoring device according to one of Claims 2 to 4, characterised in that the collecting lens (7) consists of a material, the index of refraction of which is greater than that of $SF_6$ (sulphur hexafluoride).

6. A monitoring device according to one of Claims 2 to 5, characterised in that the collecting lens (7) consists of acrylic glass.

7. A monitoring device according to Claim 2 or 3, characterised in that the reflector (5) is constructed of a perforated material in the shape of a basket and can be pushed onto the collecting lens (7) and that the reflector (5) is provided in the area of reflection with a metal mirror or a mirrored surface (6).

8. A monitoring device according to one of Claims 1 to 7, characterised in that the optical wave guide (3), which is connected to an external light source, is arranged to be stepped back in the axial direction with respect to the other optical wave guide (4).

9. A monitoring device according to one of Claims 1 to 8, characterised in that both optical wave guides (3, 4) are combined in a multi-core light guide bundle having a transmit bundle and a receive bundle.

10. A monitoring device having a passive optical detector for detecting unwanted arcs in the switching systems and particularly in encapsulated $SF_6$-insulated high-voltage switching systems, comprising an optical wave guide (13), which is inserted in a gas-tight manner, for conducting out the light pulses of an unwanted arc, characterised in that the detector is not metallic and is provided with at least a second optical wave guide (12) which is connected to an external light source for generating test pulses of light (16), that the test pulse of light (16) is conducted through a part of the space to be monitored before it re-enters the detector and the first optical wave guide (13), and that the optical wave guide (12) conducting the test pulse of light (16) is bent and arranged in such a manner that the test pulse of light (16) emerging from its free end into the space to be monitored immediately re-enters the detector.

**Revendications**

1. Dispositif de surveillance pourvu d'un détecteur optique passif (8) pour détecter des arcs électriques parasites dans des appareils de commutation, en particulier dans des appareils de commutation à haute tension, blindés, isolés par du SF$_6$, comportant un conducteur de lumière (4) mis en place d'une manière étanche au gaz pour transmettre l'impulsion lumineuse (18) d'un arc électrique parasite, caractérisé en ce que le détecteur (8) n'est pas métallique et comporte au moins un second conducteur de lumière (3) raccordé à une source de lumière externe pour produire des impulsions lumineuses d'essai, le détecteur (8) comporte un cylindre de protection (1) dans lequel les deux conducteurs de lumière (3, 4) sont disposés dans le sens axial, le cylindre de protection (1) comporte, au niveau de sa face d'about, une lentille de convergence (7) destinée à focaliser les impulsions lumineuses d'essai (15) et l'impulsion lumineuse d'essai (15) traverse une partie de l'espace à surveiller avant de pénétrer à nouveau dans le détecteur (8) et dans le premier conducteur de lumière (4).

2. Dispositif de surveillance suivant la revendication 1, caractérisé en ce que le cylindre de protection (1) est transparent et sa face d'about a la forme d'une lentille de convergence (7), un réflecteur (5) étant prévu à une certaine distance de la lentille de convergence (7).

3. Dispositif de surveillance suivant la revendication 1, caractérisé en ce que le cylindre de protection (1) et la lentille de convergence (7) peuvent être assemblés, le cylindre de protection (1) est fait d'une autre matière que la lentille de convergence (7) et un réflecteur (5) est disposé à une certaine distance devant la lentille de convergence (7).

4. Dispositif de surveillance suivant la revendication 2 ou 3, caractérisé en ce que la lentille de convergence (7) présente un méplat (14) dans la zone de l'axe optique.

5. Dispositif de surveillance suivant l'une quelconque des revendications 2 à 4, caractérisé en ce que la lentille de convergence (7) est faite d'une matière dont l'indice de réfraction est supérieur à celui du SF$_6$ (hexafluorure de soufre).

6. Dispositif de surveillance suivant l'une quelconque des revendications 2 à 5, caractérisé en ce que la lentille de convergence (7) est en verre acrylique.

7. Dispositif de surveillance suivant la revendication 2 ou 3, caractérisé en ce que le réflecteur (5) a la forme d'un capuchon en matière perforée et peut être glissé sur la lentille de convergence (7) et le réflecteur (5) présente, dans la zone de réflexion, un miroir métallique ou une surface réfléchissante (6).

8. Dispositif de surveillance suivant l'une quelconque des revendications 1 à 7, caractérisé en ce que le conducteur de lumière (3) raccordé à la source de lumière externe est disposé en retrait dans le sens axial par rapport à l'autre conducteur de lumière (4).

9. Dispositif de surveillance suivant l'une quelconque des revendications 1 à 8, caractérisé en ce que les deux conducteurs de lumière (3, 4) sont groupés dans un faisceau de conducteurs de lumière multiple comprenant un faisceau d'émission et un faisceau de réception.

10. Dispositif de surveillance pourvu d'un détecteur optique passif pour détecter des arcs électriques parasites dans des appareils de commutation, en particulier dans des appareils de commutation à haute tension, blindés, isolés par du SF$_6$, comportant un conducteur de lumière (13) mis en place d'une manière étanche au gaz pour transmettre les impulsions lumineuses d'un arc électrique parasite, caractérisé en ce que le détecteur n'est pas métallique et comporte au moins un second conducteur de lumière (12) raccordé à une source de lumière externe pour produire des impulsions lumineuses d'essai (16), l'impulsion lumineuse d'essai (16) traverse une partie de l'espace à surveiller avant de pénétrer à nouveau dans le détecteur et dans le premier conducteur de lumière (13), et le conducteur de lumière (12) qui amène l'impulsion de lumière d'essai (16) est courbé et disposé de manière que l'impulsion de lumière d'essai (16) sortant de son extrémité libre dans l'espace à surveiller pénètre directement à nouveau dans le détecteur.

0 020 349

Fig. 1

Fig. 2

Fig. 3